# EUROPÄISCHE PATENTSCHRIFT

(11) **EP 0 968 984 B1**
(45) Veröffentlichungstag und Bekanntmachung des Hinweises auf die Patenterteilung: **23.04.2003**
(21) Anmeldenummer: 98810602.7
(22) Anmeldetag: 29.06.1998
(51) Int. Cl.: C06B 33/00, C06B 45/00, G06F 1/00, G08B 13/00, G11B 5/62, G11B 7/24, G11B 23/28, F42D 3/00

(54) **Pyrotechnische Schicht zur gezielten Zerstörung von maschinenlesbaren Daten auf Datenträgern**
Pyrotechnic layer for the targeted destruction of machine readable data on information carriers
Couche pyrotechnique pour la destruction ciblée des données lisibles par machine sur des supports de données

(43) Veröffentlichungstag der Anmeldung: 05.01.2000
(73) Patentinhaber: RUAG Munition, 3602 Thun (CH)
(72) Erfinder: Schweizer, Philemon, 3612 Steffisburg (CH); Kutzli, Jörg, 3631 Höfen (DE); Karametaxas, Georgios, Dr., 3012 Bern (CH); Tobler, Markus, 3662 Seftigen (CH)
(74) Vertreter: Frauenknecht, Alois J.

(56) Entgegenhaltungen:
- EP-A- 0 365 503
- EP-A- 0 645 354
- WO-A-87/03400
- WO-A-97/22571
- WO-A-97/39442
- DE-A- 4 439 304
- FR-A- 2 518 086
- US-A- 4 151 022
- US-A- 4 931 770
- US-A- 5 608 380
- PATENT ABSTRACTS OF JAPAN vol. 016, no. 226 (M-1254), 26. Mai 1992 & JP 04 044898 A (TOPPAN PRINTING CO LTD), 14. Februar 1992

## Beschreibung

Die vorliegende Erfindung bezieht sich auf eine pyrotechnische Schicht zur gezielten Zerstörung von maschinenlesbaren Daten auf Datenträgern, insbesondere auf einer Festspeicherplatte, wobei die pyrotechnische Schicht flächig auf einem strukturierten Substrat, im Arbeitsbereich des Datenträgers angeordnet und elektrisch zündbar ist.

Die hohe Speicherdichte heutiger Datenträger beinhaltet die grosse Gefahr eines Datenmissbrauchs, sowohl im persönlichen, wirtschaftlichen als auch im militärischen Bereich. Es stellt sich daher die Aufgabe, dass Daten, bevor sie Unbefugten in die Hände geraten, vollständig zu vernichten sind. Diese Aufgabe ist durch die weltweite Verbreitung von "Compact Discs" (CD-ROM = CD Read Only Memory) und die zunehmende Verbreitung von "Digital Versatile Discs" (DVDs) zu einer technischen Herausforderung geworden, war es doch die Zielsetzung der Schöpfer dieser Generation Datenträger, die Unverletzlichkeit der gespeicherten Daten zu gewährleisten. Die Erfindung bezieht sich ferner auf ein Verfahren zur Herstellung der pyrotechnischen Schicht sowie auf deren Verwendung.

Verschiedenste Versuche CD-ROMs und DVDs rasch und sicher zu vernichten, sind fehlgeschlagen, insbesondere weil durch die heutigen Mittel zur Rekonstruktion von Daten mittels optischen Geräten und Algorithmen, die der Datenverschlüsselung entstammen, nicht vollständig zerstörte Datenstrukturen wieder lesbar sind. Die höchste Daten-Vernichtungsrate, bei geringstem technischen Aufwand, wurde im Labor durch eine thermische Zerstörung der Daten mittels dünnen pyrotechnischen Schichten, in Form von Folien erzielt. Ihre physische Zuordnung zu den Datenträgern bereitete aber unerwartete Schwierigkeiten, insbesondere in Bezug auf deren Haftfähigkeit, Schichtdicke, Reaktionsgeschwindigkeit und durch ihr unregelmässiges und oft nicht reproduzierbares Abbrandverhalten.

Aus der GB -A- 2 282 136 ist u.a. eine pyrotechnische Folie bekannt, bei der ein rasch oxidierendes Material beidseitig auf eine strukturierte, als Oxidator wirkende Schicht aufgebracht ist. Nach der Zündung bewirken beide Schichten einen stark exothermen Prozess mit hoher Reaktionsgeschwindigkeit und generieren eine Abbrandtemperatur von mehreren tausend Grad Celsius.

Praktische Versuche haben gezeigt, dass eine derartige Folie, die zur Zündung von Gasgeneratoren und Raketenmotoren entwickelt wurde, zu rasch abbrennt und die Umgebung der Datenträger zu sehr in Mitleidenschaft zieht oder sogar zerstört. Nur schon aus Sicherheitsgründen kommt sie für einen Einsatz mit CD-ROM's, DVD's und CD-RW's (CD ReWriter-Laufwerke) nicht in Frage.

Bekannt (WO -A- 97/39442) ist die Anordnung von Metall mit einem niedrigen Schmelzpunkt, wie Zinn oder Zink oder deren Legierungen oder auch von Harzen in einer Schicht auf einem flächigen Datenträger. Zur Vernichtung der Daten ist das Aufschmelzen der niedrig schmelzenden Schicht mittels einer externe Wärmequelle, Laser oder durch Reibung ("polieren") vorgesehen, was eine Zerstörung des Datenträgers zu Folge haben soll. In einer Ausführungsform ist eine Einbringen von Brennstoff in die niedrig schmelzende Schicht vorgeschlagen um die Wärmeausbreitung zu unterstützen.

Nachteilig bei dieser Lösung ist die hohe, ausserhalb des Datenträgers aufzubringende und in die Schicht einzuleitende Energie um eine Zerstörung des Trägers zu erreichen. Zudem ist nicht gewährleistet, dass die Daten - beispielsweise durch andere Leser - nicht rekönstruierbar sind, ist doch die in die Fläche der Schicht des Datenträgers einbringbare Wärmemenge physikalisch bedingt, sehr beschränkt und einer verzögerten Ausbreitung unterworfen.

Zur Zerstörung von Leiterplatten von elektronischen Schaltungen sind als nächstliegender Stand der Technik Wabenstrukturen ähnliche Anordnungen bekannt (US -A- 367668), welche eingekapselte pyrotechnische Stoffe oder Thermit enthalten. Eine derartige Anordnung lässt sich an einem beliebigen Ort elektrisch Zünden und kann genügend Hitze entwickeln um auch darauf aufgebaute Speicherbausteine etc. zu vernichten. Die Leiterplatte muss in ihrem Verhältnis von Fasermaterial und aktivem Material der Matrix optimiert werden, um nicht durch wärmeabgebende Bauelemente initiiert, d.i. zerstört, zu werden. Zudem ist eine ausreichende mechanische Festigkeit und damit eine relative grosse Dicke derartiger Leitungs- und Trägerplatten erforderlich, insbesondere um auch militärischen Anforderungen zu genügen.

Es ist daher Aufgabe der Erfindung Datenträger mit einer pyrotechnische Schicht zur Zerstörung der Daten insbesondere auf Festspeicherplatten zu schaffen, welche die vorerwähnten Nachteile nicht aufweisen, eine vollständige Zerstörung aller Daten gewährleistet und eine Schichtdicke von weniger als 1.0 mm erfordert. Die Schicht soll mechanisch einwandfrei auf üblichen Trägern haften und auch eventuellen Wärmedehnungen und/oder Biegungen widerstehen bzw. sie darf im praktischen Betrieb nicht abplatzen. Ausserdem soll die pyrotechnische Schicht keine toxischen Stoffe aufweisen und/oder in Verbindung mit Gehäuseteilen und Datenträgern keine solche entwickeln.

Diese Aufgabe wird gemäß den Patentansprüchen 1,11 und 12 gelöst. Durch die inerte Trägerstruktur wird eine hohe mechanische Festigkeit erreicht; es erfolgt zudem eine gezielte Wärmeentwicklung und -Ausbreitung, wobei diese inerte Struktur eine Art thermischer Puffer bildet und unkontrollierte Energieverluste durch Diffusion verhindert.

Durch die inerte Struktur kann die Gesamtenergie niedrig gehalten werden; es besteht keine Brandgefahr und es entstehen, in den zur Anwendung gelangenden Geräten, keine oder nur geringe Schäden durch die resultierende Wärmeentwicklung. Ebenfalls besteht keine Gefährdung der Anlagenbenutzer durch Verpuffungen etc.

Der Erfindungsgegenstand lässt sich aufgrund seiner guten Haftfähigkeit und der geringen erforderlichen Schichtdicke universell in Geräten und an Gegenständen anwenden.

In nachfolgenden abhängigen Ansprüchen sind bevorzugte Weiterbildungen des Erfindungsgegenstandes charakterisiert.

Besonders geeignet ist das Glasfaservlies nach Anspruch 2; ist es doch im Handel als Fertigprodukt erhältlich und weist eine hohe Flexibilität auf. Ebenfalls kommen Vliese aus anderen inerten Materialien wie feiner Steinwolle oder Textilien in Frage.

Es genügen relativ dünne Vliese, wobei ein optimales Flächengewicht im Bereich von 30 g/m² liegt.

Thermitmischungen nach, Anspruch 4, haben sich bewährt, sie sind aber mit Vorteil keine stöchiometrische Mischungen, da diese sehr heftig reagieren.

Durch einen Überschuss an Reduktionsmittel, Anspruch 5, lässt sich die Reaktionsgeschwindigkeit steuern.

Eisen, gemäss Anspruch 6, nimmt nicht primär an der chemischen Hauptreaktion teil, es bewirkt eine Herabsetzung der Reaktionstemperatur und gibt die aufgenommene Energie in Form von Strahlung, zeitverzögert ab. - Dies ermöglicht einen optimalen Temperaturverlauf im Speichermedium.

Besonders bewährt hat sich eine pyrotechnische Schicht nach Anspruch 7, die mit einem handelsüblichen Binder auf das inerte Material auf- und eingebracht wird.

Die polymere Schutzschicht, gemäss Anspruch 8, kann in Form eines Schutzlackes aufgebracht sein; eine mechanische Beschädigung und/oder unzeitgemässe Initiierung lässt sich aber auch durch eine Abdeckung, beispielsweise durch eine Polymerschutzschicht, eine Metallfolie oder Kunststoff-Folie schützen.

Die Bildung einer Zündkette, gemäss Anspruch 9, erleichtert die gezielte und schnelle Vernichtung gespeicherter Daten und des Datenträgers auch in Notsituationen.

Eine integrierte Stromversorgung mittels einer Miniaturbatterie, analog Anspruch 10, erhöht die Systemsicherheit und erleichert die automatisierte Ansteuerung der Daten-Zerstörung.

Die Ansprüche 11 und 12 beschreiben bevorzugte Herstellungsverfahren zur Erzeugung einer geeigneten pyrotechnischen Schicht, wobei das Verfahren nach Anspruch 15 als Basis für die Erzeugung von geeigneten pyrotechnischen Schichten gilt und das Verfahren nach Anspruch 16 vorwiegend für CD's und DVD's geeignet ist.

Nachfolgend werden anhand von schematischen Zeichnungen Ausführungsbeispiele der Erfindung dargestellt. Es zeigen:
- Fig. 1: eine CD-ROM mit einer oberen pyrotechnischen Schicht, in Schnittdarstellung,
- Fig. 2a bis 2c: den charakteristischen Aufbau einer pyrotechnischen Schicht in drei Varianten,
- Fig. 3: eine DVD mit einer pyrotechnischen Zwischenlage,
- Fig. 4: die in Fig. 3 gezeigte Zwischenlage mit ihren Hilfsmitteln zur parallelen Lagerung der Datenträger,
- Fig. 5: ein Caddy mit einer pyrotechnischen Schicht mit integrierter Spannungsquelle und Zündvorrichtung und
- Fig. 6: das Grundprinzip der Zuordnung von pyrotechnischen Schichten zu beliebigen Datenträgern, am Beispiel einer Cardridge.

In sämtlichen Figuren sind gleiche Funktionsteile mit gleichen Bezugsziffern versehen.

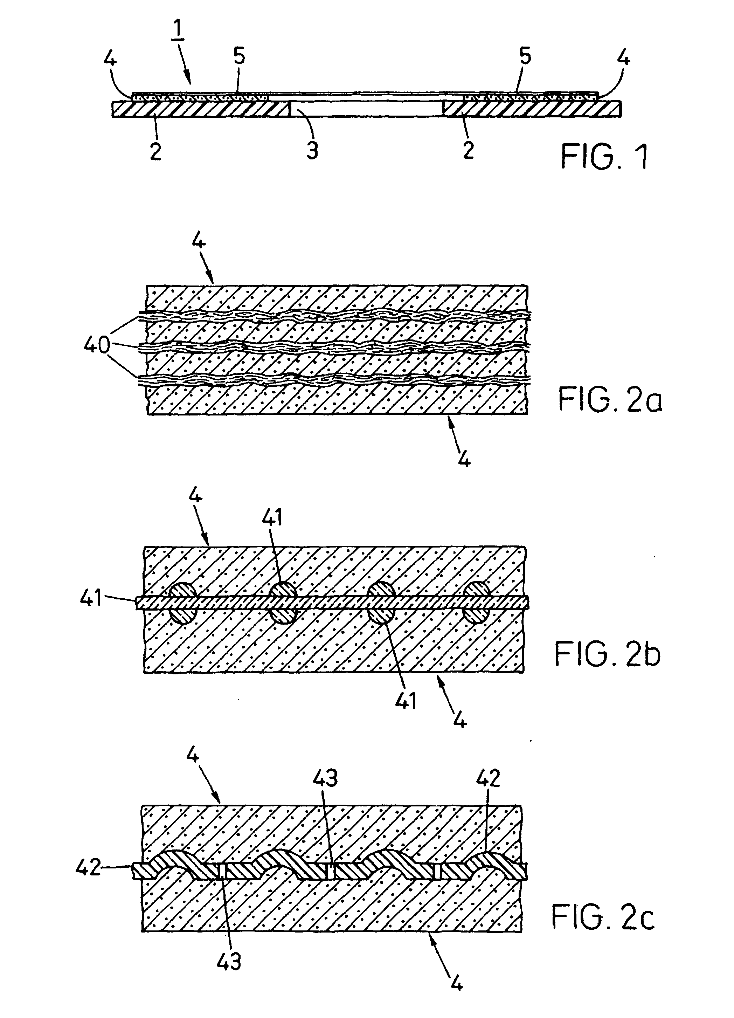

Eine bespielte/beschriebene CD-ROM ist in Fig. 1 mit 1 bezeichnet. Auf diese notorisch bekannte, handelsübliche CD-ROM 1 ist auf deren Datenträger 2 eine pyrotechnische Schicht 4 aufgeklebt, welche im Bereich ihrer Bohrung 3, im Radius gemessen auf 5 mm an die innere (erste) Datenspur heranreicht und analog peripher auf 5 mm an die letzte Datenspur. Darüber befindet sich der übliche Aufdruck 5 entweder in Form eines beschrifteten Labels oder im Siebdruckverfahren aufgebracht.

Eine derart beschichtete CD-ROM lässt sich mit bekannten Zündmitteln initiieren und verliert aufgrund der grossen resultierenden Hitzeentwicklung sämtliche Daten, d.h. sämtliche Pits werden unlesbar, ohne dass das Polycarbonat des Datenträgers entflammt wird.

Varianten der erfindungsgemässen pyrotechnischen Schichten 4 sind in den Fig. 2a bis 2c in vereinfachten Schnittdarstellungen zu sehen. In allen Fällen beträgt die Schichtdicke 0.4 mm; sie unterscheiden sich lediglich durch die Art der eingelegten inerten Struktur. In Fig. 2a handelt es sich um ein dreilagiges Vlies 40 aus Glasfasern; in Fig. 2b um ein Gewebe/Netz 41, ebenfalls aus Glasfasern und in Fig. 2c um eine Folie 42 mit Noppenstruktur und regelmässig verteilten Löchern 43 aus mineralischem oder metallischem Material. - Ebenfalls lassen sich hierfür hitzebeständige Kunststoffe verwenden.

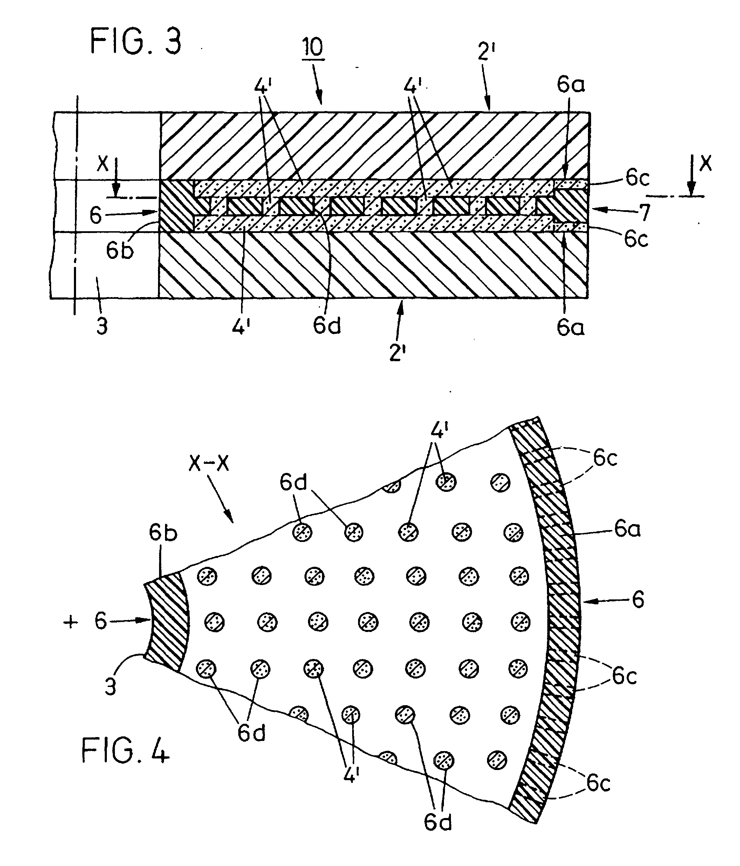

Die Schnittdarstellung Fig. 3 zeigt eine Hälfte einer DVD 10 mit einer mittig angeordneten kompakten pyrotechnischen Schicht 4'. Während die beiden Datenträger 2' in üblicher Weise aufgebaut und bespielt sind, weist die Schicht 4 eine als Distanzhalter ausgestaltete Zwischenlage 6 auf.

Aussen besitzt diese Zwischenlage 6 ein äusseres Auflager 6a, in Form eines Ringkernes 7, welcher Durchbrüche 6c aufweist und in denen sich die pyrotechnische Schicht 4' nach aussen ausdehnt. Dies ist auch in Fig. 4, der Ansicht X--X zu entnehmen. - Im weiteren sind dort zahlreiche Bohrungen 6d zu sehen, die gemäss Fig. 3 ebenfalls mit der pyrotechnischen Masse 4' ausgefüllt sind. Ein innerer Ring ist völlig geschlossen und bildet ein inneres Auflager 6b.

Die pyrotechnische Schicht 4' ist an sich äquivalent zu derjenigen nach Fig. 2a, ausser dass deren pyrotechnische Masse durch die durch die Bohrungen 6d gebildete wabenartige Struktur mit der oberen und der unteren Fläche der Schicht 4' verbunden ist.

Die DVD 10 kann somit von aussen gezündet werden, was sogar während des Betriebes, mit den nachfolgend beschriebenen Mitteln durchführbar ist.

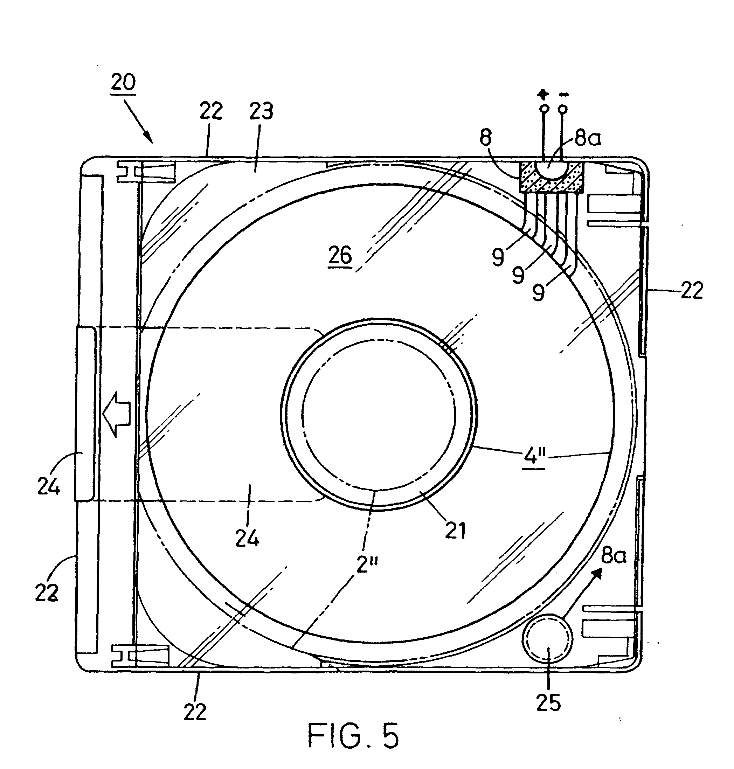

Die Figur 5 zeigt einen möglichen Einbau einer pyrotechnischen Schicht 4" in ein handelsübliches Caddy 20; die beiden Seitenwände sind hier mit 23, die vier Stirnseiten mit 22 und der Lese-Schieber mit 24 bezeichnet.

Die Schicht 4" ist direkt unter dem an sich tranparenten Deckel 26 des Caddy 20 aufgebracht und konzentrisch zur eingezeichneten Abdeckung 21 des Lagerflansches der CD-ROM angeordnet; in Fig. 5 sind die Begrenzungslinien der Schicht 4" ersichtlich.

Vorteilhafterweise wird hierfür im Deckel 26 eine konzentrische Ausnehmung vorgesehen, in welche die pyrotechnische Schicht eingelassen ist und mit der Innenseite des Deckels eine Ebene bildet.

Im weiteren ist in Fig. 5 ein Zündelement 8, mit einem Glühzünder 8a und drei Zündkanälen 9 zu sehen, welche nach einer elektrisch erfolgten Initiierung die Schicht 4" anzünden.

Der Glühzünder 8a kann dabei über seine mit + und - charakterisierten Anschlüsse durch einen Steuerbefehl eines angeschlossenen Computers und über dessen eigene Stromquelle 25 initiiert werden. Die autonome Stromquelle 25 - eine oder mehrere in Serie geschaltete Knopfzellen - ermöglicht aber auch eine andere, beispielsweise elektromechanische Ansteuerung des Glühzünders 8a.

Anstelle der direkten Zündung des Glühzünders 8a mittels einer Stromquelle 25 liesse sich auch eine Induktionsspule einsetzen, welche den Glühdraht des Zünders 8a impulsartig mit Strom versorgt.

Das Verfahren zur Herstellung einer pyrotechnischen Schicht erfolgt mit konventionellen Techniken: In einem ersten Ver-fahrensschritt werden 30 Gew.-% Fe₂O₃, 16 Gew.-% MnO₂, 13 Gew.-% Al, 21 Gew.-% Zr und 20 Gew.-% Fe miteinander vermengt und dieser Mischung anschliessend 3 Gew.-% polymerer Binder zugesetzt; in einem zweiten Verfahrensschritt Butylacetat so lange zugegeben bis eine streichfähige Masse entsteht und diese in einem dritten Verfahrensschritt auf einer Netz-/Noppen- und/oder Wabenstruktur aus inertem Material auf- und eingebracht, glattgestrichen und getrocknet.

Als bevorzugtes Ausführungsbeispiel gilt folgende Herstellungsmethode für eine pyrotechnische Schicht von 0.4 mm Dicke:

In einem ersten Verfahrensschritt werden 30 Gew.-% Fe₂O₃, 16 Gew.-% MnO₂, 13 Gew.-% Al, 21 Gew.-% Zr und 20 Gew.-% Fe, als Trockensubstanzen in einer Reibschale miteinander vermengt und anschliessend wird dieser Mischung zusätzlich 12 Gew.-% Binder 14, bestehend aus Styrol-Copolymer und modifiziertem Kolophoniumharz, zugesetzt. In einem zweiten Verfahrensschritt wird 52 Gew.-% Butylacetat zugegeben, so dass eine streichfähige Masse entsteht und in einem dritten Verfahrensschritt wird diese Masse auf einem Vlies aus Glasfasern, mittels eines handelsüblichen Streichgeräts aufgebracht. Dabei wird das Streichgerät langsam, mit konstanter Geschwindigkeit über das Vlies geführt, so dass dieses vollständig mit der pyrotechnischen Masse getränkt ist. Die derart gebildete Schicht wird dann bei 70 °C während 3 h getrocknet.

Die Komponenten der pyrotechnischen Mischung weisen folgende mittlere Korngrössen auf:
Zirkon < 5 m
Aluminium < 100 m
Eisendioxid < 100 m
Manganoxid < 100 m
Eisen < 150 m

Der verwendete Binder 14 ist handelsüblich (Firma Proga AG, CH-2540 Grenchen). Das Streichgerät ist vom Typ Erichson (Firma DESAG GmbH KG, D-58675 Hemer). Das Vlies ist ein sogenanntes Oberflächenvlies mit einem Flächengewicht von 27 g/m² (ASEOL Nr. 31-56 der Firma ASEOL AG, CH- 3000 Bern). Die Gewichtsangaben des Binders und des Butylacetats beziehen sich dabei auf die Gesamtmasse der Trockensubstanz der Mischung.

Klebbar auf den meisten Oberflächen, insbesondere wenn sie aufgerauht sind, ist die pyrotechnische Schicht mit handelsüblichen Sprühklebern (z.B. Miranit der Firma Ed. Geistlich und Söhne AG, CH-8952 Schlieren).

Es empfiehlt sich zusätzlich die geklebte Schicht mit einer dünnen Schicht Klarlack, beispielsweise Zaponlack zu besprühen, damit deren Abriebfestigkeit erhöht wird.

Es wurde in allen Fällen, im praktischen Versuch, nachgewiesen, dass eine sichere Zündung der pyrotechnischen Schicht auch während des Betriebs, d.h. während des Auslesens von Daten geährleistet ist und dass selbst dann keine rekonstruierbaren Datenstrukturen zurückbleiben.

Selbstverständlich ist der Erfindungsgegenstand nicht auf elektrooptische Systeme beschränkt, er kann genau so auf magnetische, magnetooptische aber auch auf elektronische Speicher angewendet werden. Die geringe erforderliche Schichtdicke und die optimale Wärmeverteilung innerhalb der gezündeten Schicht erlauben eine erfolgreiche Integration in die meisten Wechselplattensysteme, ungeachtet ob sie auf elektronischer, magnetischer, magnetooptischer oder rein optischer Basis funktionieren und ohne dass wesentliche Konstruktionsänderungen notwendig sind.

Ebenfalls kann der Gegenstand leicht mit externen und internen elektromechanischen und/oder elektronischen Sicherheitsmassnahmen kombiniert werden, beispielsweise derart, dass der Versuch eines unerlaubten Zugriffs auf die gespeicherten Daten und/oder die nicht autorisierte Entnahme des Datenträgers dessen Zerstörung initiiert.

### Bezeichnungsliste

- 1: CD-ROM
- 2- 2": Datenträger (bespielt)
- 3: Bohrung (unbeschriebene Fläche von 1)
- 4- 4": pyrotechnische Schicht/ pyrotechn. Mischung
- 5: Aufdruck (Beschriftung, Label etc.)
- 6: Zwischenlage / Distanzhalter
- 6a: äusseres Auflager (geschlossener Ring)
- 6b: inneres Auflager (Ring mit radialen Durchbrüchen)
- 6c: Durchbrüche
- 6d: Bohrungen
- 7: Ringkern
- 8: Zündelement
- 8a: Glühzünder mit Stromanschluss
- 9, 9': Zündkanal
- 10: DVD

- 20: Caddy
- 21: Abdeckung für Lagerflansch (im Deckel)
- 22: Stirnseiten (Caddy)
- 23: Seitenwände (Caddy)
- 24: Lese-Schieber
- 25: Autonome Stromquelle (Knopfzelle)
- 26: Deckel von 20

- 30: Wechseldatenträger (Datenband; Hard-drive)
- 31: Seitenwand (Cardridge)
- 32: Stirnwand (Cardridge)
- 33: Spule / Wickelkörper

- 40: Vlies
- 41: Gewebe / Netz
- 42: Folie mit Noppenstruktur
- 43: Löcher in 42

## Patentansprüche

1. Datenträger (2-2") mit pyrotechnischer Schicht (4-4") zur gezielten Zerstörung von Bereichen des Datenträgers, wozu pyrotechnisches Material in einer inerten Matrix, insbesondere einer Vlies- oder Netzstruktur (40,41) eingelagert ist, **dadurch gekennzeichnet, dass** die pyrotechnische Schicht (4-4") zusammenhängend in der Vlies- oder Netz- oder einer Noppen- und/oder Wabenstruktur (42-43) aus inertem Material eingelagert ist und wobei der Datenträger mit seiner Datenstruktur und der pyrotechnischen Schicht (4-4") derart ausgelegt ist, dass auf ihm bei Rotation zugegriffen werden kann, also insbesondere als optische Datenplatte wie Compact Disc oder DVD.

2. Datenträger nach Anspruch 1, **dadurch gekennzeichnet, dass** das inerte Material Glasfaser oder Steinwolle ist, insbesondere in Form eines Vlieses.

3. Datenträger nach Anspruch 2, **dadurch gekennzeichnet, dass** das Glasfaservlies ein Flächengewicht von weniger als 50 g/m² aufweist.

4. Datenträger nach Anspruch 1, **dadurch gekennzeichnet, dass** die pyrotechnische Schicht aus einer Thermitmischung besteht.

5. Datenträger nach Anspruch 4, **dadurch gekennzeichnet, dass** gegenüber dem stöchiometrischen Verhältnis der Thermitmischung ein Überschuss an Reduktionsmittel vorhanden ist.

6. Datenträger nach Anspruch 5, **dadurch gekennzeichnet, dass** der Thermitmischung ein Wärmespeicher in Pulverform zugeordnet ist, durch Zugabe von bis zu 30 Gew.-% Eisen, Nickel, Wolfram oder Kupfer.

7. Datenträger nach Anspruch 6, **dadurch gekennzeichnet, dass** die Thermitmischung aus 30 Gew.-% Fe₂O₃, 16 Gew.-% MnO₂, 13 Gew.-% Al, 21 Gew.-% Zr und 20 Gew.-% Fe besteht.

8. Datenträger nach Anspruch 1, **dadurch gekennzeichnet, dass** die pyrotechnische Schicht durch eine Schutzschicht abgedeckt ist, wobei diese aus Metall, Keramik oder einem Polymer besteht.

9. Datenträger nach Anspruch 1, **dadurch gekennzeichnet, dass** die pyrotechnische Schicht durch einen Glühzünder (8a) mit angeschlossenen Kanälen (9), welche einen Andzündsatz enthalten, zündbar ist.

10. Datenträger nach Anspruch 9, **dadurch gekennzeichnet, dass** dem Glühzünder (8a) eine eigene Stromversorgung (25) zugeordnet ist, welche extern zuschaltbar ist.

11. Verfahren zur Herstellung eines Datenträgers mit einer pyrotechnischen Schicht (4-4") zur gezielten Zerstörung von maschinenlesbaren Daten auf rotierenden Datenträgern (2-2"), insbesondere auf optischen Datenträgern wie Compact Disks (1) oder DVDs, wobei eine pyrotechnische Schicht flächig auf oder in einem strukturierten Substrat, im Arbeitsbereich des Datenträgers angeordnet und elektrisch zündbar ist, wozu in einem ersten Verfahrensschritt 30 Gew.-% Fe₂O₃, 16 Gew.-% MnO₂, 13 Gew.-% Al, 21 Gew.-% Zr und 20 Gew.-% Fe miteinander vermengt werden und dass dieser Mischung anschliessend 3 Gew.-% polymerer Binder zugesetzt wird und in einem zweiten Verfahrensschritt Butylacetat so lange zugegeben wird, bis eine streichfähige Masse entsteht und dass in einem dritten Verfahrensschritt diese Masse zusammenhängend auf einer Netz-/Noppen- und/oder Wabenstruktur aus inertem Material auf- und eingebracht, glattgestrichen und getrocknet wird so dass auf ihm bei Rotation zugegriffen werden kann.

12. Verfahren zur Herstellung eines Datenträgers mit einer pyrotechnischen Schicht (4-4") zur gezielten Zerstörung von maschinenlesbaren Daten auf Datenträgern (2-2"), insbesondere auf rotierenden Datenträgern, insbesondere auf optischen Datenträgern wie Compact Disks (1) oder DVDs, wobei eine pyrotechnische Schicht flächig auf oder in einem strukturierten Substrat, im Arbeitsbereich des Datenträgers angeordnet und elektrisch zündbar ist,wozu in einem ersten Verfahrensschritt 30 Gew.-% Fe₂O₃, 16 Gew.-% MnO₂, 13 Gew.-% Al, 21 Gew.-% Zr und 20 Gew.-% Fe miteinander vermengt werden anschliessend dieser Mischung 12 Gew.-% polymerer Binder zugesetzt wird, in einem zweiten Verfahrensschritt 52 Gew.-% Butylacetat zugegeben wird, bis eine streichfähige Masse entsteht und in einem dritten Verfahrensschritt diese Masse zusammenhängend auf einer Netz/Noppen- und/oder Wabenstruktur aus inertem Material ein- und aufgebracht, glattgestrichen und getrocknet wird, so daß auf ihm bei Rotation zugegriffen werden kann.

## Claims

1. Data carrier (2-2'') with pyrotechnic layer (4-4'') for the targeted destruction of regions of the data carrier, for which purpose pyrotechnic material is incorporated in an inert matrix, in particular a nonwoven or netting structure (40, 41), **characterized in that** the pyrotechnic layer (4-4'') is incorporated in a contiguous manner in the nonwoven or netting structure or a studded and/or honeycomb structure (42-43) of inert material, and the data carrier with its data structure and the pyrotechnic layer (4-4'') being designed in such a way that it can be accessed under rotation, that is in particular as an optical data disc such as a compact disc or DVD.

2. Data carrier according to Claim 1, **characterized in that** the inert material is glass fibre or mineral wool, in particular in the form of a fleece.

3. Data carrier according to Claim 2, **characterized in that** the glass fibre fleece has a weight per unit area of less than 50 g/m².

4. Data carrier according to Claim 1, **characterized in that** the pyrotechnic layer comprises a thermite mixture.

5. Data carrier according to Claim 4, **characterized in that**, in comparison with the stoichiometric ratio of the thermite mixture, there is an excess of reducing agent.

6. Data carrier according to Claim 5, **characterized in that** the thermite mixture is assigned a heat store in powder form, by the addition of up to 30% by weight of iron, nickel, tungsten or copper.

7. Data carrier according to Claim 6, **characterized in that** the thermite mixture comprises 30% by weight of Fe₂O₃, 16% by weight of MnO₂, 13% by weight of Al, 21% by weight of Zr and 20% by weight of Fe.

8. Data carrier according to Claim 1, **characterized in that** the pyrotechnic layer is covered by a protective layer, the latter consisting of metal, ceramic or a polymer.

9. Data carrier according to Claim 1, **characterized in that** the pyrotechnic layer can be ignited by a bridgewire fuse (8a) with connected channels (9), which contain a priming charge.

10. Data carrier according to Claim 9, **characterized in that** the bridgewire fuse (8a) is assigned a dedicated power supply (25), which can be activated externally.

11. Method of producing a data carrier with a pyrotechnic layer (4-4'') for the targeted destruction of machine-readable data on rotating data carriers (2-2''), in particular on optical data carriers such as compact discs (1) or DVDs, a pyrotechnic layer being arranged in a sheet-like manner on or in a structured substrate, in the operating region of the data carrier, and electrically ignitable, for which purpose, in a first method step, 30% by weight of Fe₂O₃, 16% by weight of MnO₂, 13% by weight of Al, 21% by weight of Zr and 20% by weight of Fe are mixed with one another and 3% by weight of polymeric binder is subsequently added to this mixture, and, in a second method step, butyl acetate is added until a spreadable composition is obtained and, in a third method step, this composition is applied and introduced in a contiguous manner on a netting/studded and/or honeycomb structure of inert material, spread smooth and dried, so that the data carrier can be accessed under rotation.

12. Method for producing a data carrier with a pyrotechnic layer (4-4'') for the targeted destruction of machine-readable data on data carriers (2-2''), in particular on rotating data carriers, in particular on optical data carriers such as compact discs (1) or DVDs, a pyrotechnic layer being arranged in a sheet-like manner on or in a structured substrate, in the operating region of the data carrier, and electrically ignitable, for which purpose, in a first method step, 30% by weight of Fe₂O₃, 16% by weight of MnO₂, 13% by weight of Al, 21% by weight of Zr and 20% by weight of Fe are mixed with one another, subsequently 12% by weight of polymeric binder is added to this mixture, in a second method step, 52% by weight of butyl acetate is added until a spreadable composition is obtained and, in a third method step, this composition is introduced and applied in a contiguous manner on a netting/studded and/or honeycomb structure of inert material, spread smooth and dried, so that the data carrier can be accessed under rotation.

## Revendications

1. Support de données (2 - 2'') avec couche pyrotechnique (4
- 4'') pour la destruction ciblée de zones du support de données, du matériau pyrotechnique étant inclus à cet effet dans une matrice inerte, en particulier une structure en voile ou réticulée (40, 41), **caractérisé en ce que** la couche pyrotechnique (4 - 4'') est incluse de façon cohérente dans la structure en voile ou réticulée ou dans une structure nopée et/ou en nid d'abeilles (42 - 43) en matériau inerte, et le support de données étant conçu avec sa structure de données et la couche pyrotechnique (4
- 4'') de sorte qu'il est possible d'y accéder lors de la rotation, donc en particulier sous forme de disque optique tel que disque compact ou DVD.

2. Support de données suivant la revendication 1, **caractérisé en ce que** le matériau inerte est de la fibre de verre ou de la laine minérale, en particulier en forme d'un voile.

3. Support de données suivant la revendication 2, **caractérisé en ce que** le voile de fibres de verre présente un poids par unité de surface de moins de 50 g/m².

4. Support de données suivant la revendication 1, **caractérisé en ce que** la couche pyrotechnique se compose d'un mélange de Thermite.

5. Support de données suivant la revendication 4, **caractérisé par** un excédent d'agent de réduction par rapport au rapport stoechiométrique du mélange de Thermite.

6. Support de données suivant la revendication 5, **caractérisé en ce qu'**un accumulateur de chaleur en forme pulvérulente est associé au mélange de Thermite, par addition de jusqu'à 30% en poids de fer, de nickel, de tungstène ou de cuivre.

7. Support de données suivant la revendication 6, **caractérisé en ce que** le mélange de Thermite se compose de 30% en poids de Fe₂O₃, de 16% en poids de MnO₂, de 13% en poids d'Al, de 21% en poids de Zr et de 20% en poids de Fe.

8. Support de données suivant la revendication 1, **caractérisé en ce que** la couche pyrotechnique est recouverte d'une couche de protection, cette dernière se composant de métal, de céramique ou d'un polymère.

9. Support de données suivant la revendication 1, **caractérisé en ce que** la couche pyrotechnique est inflammable par une amorce à incandescence (8a) avec des canaux raccordés (9), qui renferment un bloc d'allumage.

10. Support de données suivant la revendication 9, **caractérisé en ce qu'**une alimentation en courant propre (25), commutable extérieurement, est associée à l'amorce à incandescence (8a).

11. Procédé de fabrication d'un support de données avec une couche pyrotechnique (4 - 4'') pour la destruction ciblée de données lisibles par machine sur des supports de données (2 - 2'') rotatifs, en particulier sur des supports de données optiques tels que disque compact (1) ou DVD, une couche pyrotechnique étant disposée en nappe sur ou dans un substrat structuré, dans la zone de travail du support de données, et étant inflammable électriquement, 30% en poids de Fe₂O₃, 16% en poids de MnO₂, 13% en poids d'Al, 21% en poids de Zr et 20% en poids de Fe étant à cet effet mélangés entre eux et 3% en poids de liants polymères étant ensuite ajoutés à ce mélange dans une première phase de procédé, de l'acétate de butyle étant ajouté dans une deuxième phase de procédé jusqu'à ce qu'il en résulte une masse brossable, et cette masse est appliquée et introduite de façon cohérente, dans une troisième phase de procédé, sur une structure réticulée/nopée et/ou en nid d'abeilles en matériau inerte, lissée et séchée, si bien qu'il est possible d'accéder au support de données lors de la rotation.

12. Procédé de fabrication d'un support de données avec une couche pyrotechnique (4 - 4'') pour la destruction ciblée de données lisibles par machine sur des supports de données (2 - 2''), en particulier sur des supports rotatifs, notamment sur des supports de données optiques tels que disque compact (1) ou DVD, une couche pyrotechnique étant disposée en nappe sur ou dans un substrat structuré, dans la zone de travail du support de données, et étant inflammable électriquement, 30% en poids de Fe₂O₃, 16% en poids de MnO₂, 13% en poids d'Al, 21% en poids de Zr et 20% en poids de Fe étant à cet effet mélangés entre eux et 12% en poids de liants polymères étant ensuite ajoutés à ce mélange dans une première phase de procédé, 52% en poids d'acétate de butyle étant ajoutés dans une deuxième phase de procédé jusqu'à ce qu'il en résulte une masse brossable, et cette masse est appliquée et introduite de façon cohérente, dans une troisième phase de procédé, sur une structure réticulée/nopée et/ou en nid d'abeilles en matériau inerte, lissée et séchée, si bien qu'il est possible d'accéder au support de données lors de la rotation.
